# EUROPEAN PATENT APPLICATION

(11) **EP 2 077 223 A1**
(43) Date of publication of application: **08.07.2009**
(21) Application number: 07822979.6
(22) Date of filing: 09.10.2007
(51) Int. Cl.: B62K 5/04, B62J 7/06

(54) **IMPROVED FORK FOR BICYCLES AND SIMILAR**

(30) Priority: 10.10.2006 ES 200602578
(71) Applicant: Guerra Navas, Antonio Manuel, 01212 Salinillas de Buradon (Alava) (ES)
(72) Inventor: Guerra Navas, Antonio Manuel, 01212 Salinillas de Buradon (Alava) (ES)
(74) Representative: Isern-Jara, Nuria
(86) International application number: PCT/ES2007/000572
(87) International publication number: WO 2008/043870

(57) **Abstract**

Improved fork for bicycles and similar, for the transport of objects, comprising an upper fork (1) proper, in which said upper fork (1) is joined below to a trapezium body (2), two blocks (3, 4) being articulated to said trapezium set on each side of said trapezium body (2), each block (3, 4) having been provided with at least a wheel, equipped in addition with an independent shock absorption system on each block; and equipped with fastening means for coupling at least one platform for the transport of objects, in such a way that during a working condition of the bicycle, the platform (9, 11) is maintained in a position that is significantly horizontal with respect to the ground.

## Description

### OBJECT OF THE INVENTION

This application for a Patent of Invention seeks to register a fork for bicycles and similar that incorporates significant innovations and advantages over currently existing forks.

More specifically, the invention refers to an improved fork for bicycles and similar, which makes it easier to transport objects by stabilising means, said improved fork comprising the upper fork proper, that can turn with respect to the bicycle frame and to which a steering handlebar is coupled on the upper part.

### BACKGROUND TO THE INVENTION

Today, the vast majority of bicycles have a conventional configuration, which is to say, that consists of a frame made of resistant material, with a fork coupled to its front part in order to fix the front wheel and which acts as a steering system. Said fork can be rigid or equipped with any shock absorption system known on the market.

When the bicycle user wishes to transport some kind of object, the usual practice is to have a carrier or similar on the front part coupled to the handlebar, or else a metal support structure on the rear part of the bicycle on which a base can be placed for holding the objects. Today there are also children's carrier seats that can be fixed to the rear part of the frame, thus making it possible to transport children on bicycles.

Nonetheless, the chief drawback of the aforementioned structures or devices is that when the bicycle user rides over uneven ground (bumpy areas, winding paths, stony ground, etc), the objects being transported can be destabilised, causing them to fall to the ground or, when transporting children, the vibrations and knocks produced by the uneven ground directly affect the child, causing discomfort.

### DESCRIPTION OF THE INVENTION

This invention has been developed with the purpose of providing a fork for every type of bicycle and similar that overcomes the aforementioned drawbacks, providing, moreover, other additional advantages that will be clarified after the following description.

The improved fork for bicycles and similar of this invention is intended for the transportation of objects, being essentially comprised of an upper fork proper that can turn with respect to the bicycle frame by means of conventional turning methods, the upper part of which is coupled to the handlebars. It is characterised by said upper fork being joined below to a trapezium body, two blocks being articulated to said trapezium body, set on each side of said trapezium, each block having been provided with at least one sliding wheel, equipped with an independent shock absorption system on each block, and equipped with fastening means for coupling at least one platform for transporting objects, in such a way that in a working condition of the bicycle, the platform is maintained in a position that is significantly horizontal with respect to the ground. The block also includes a cushioning element joined to the prismatic body.

Thanks to these characteristics, a front fork is obtained that is applicable to bicycles designed for use in the mountains, city, etc, that makes it easier to transport objects, cases, knapsacks and children's carrier seats, since it provides greater stability with regard to the transport devices for bicycles known in the prior art technique. The fact that it has an independent shock absorption system on each block prepares for the absorption of the possible ground irregularities during the journey.

Advantageously, the upper fork can have (has?) a suspension system of the familiar type formed by two parallel tubular bodies joined together, which work hydraulically or pneumatically to absorb the impacts generated during the ride, in the same way as on a conventional bicycle.

According to another aspect of the invention, the aforementioned fastening means for coupling the platform consist of a support plate that can be made of metal or rigid plastic which is vertically positioned, and to which a fixed or moveable horizontal platform can be coupled.

Also advantageously, the moveable platform has folding means, making it possible to collapse the moveable platform with respect to the support plate, the moveable platform also being moveable in terms of height, meaning that its position can be adjusted. In a preferred embodiment, these folding means are made of hinges located on the rear part of the moveable platform, and a spring, in order thus to reduce the space the entire load occupies when it is not needed.

Furthermore, the support plate is joined below to the trapezium body and joined above to the upper fork.

In accordance with another characteristic of the improved fork of the invention, each block is equipped at one end with an axle to be coupled to the wheel, and at the opposite end with two bars articulated to the body of the trapezium, the articulation points of which correspond to the turning or rocking points, forming the trapezium body, the two side blocks and the aforementioned bars, the rocking system of the fork which is the object of this invention.

A further object of this invention is to provide an improved bicycle fork that has braking means for the wheels, which can consist of a drum located in the wheel bushing, the interior of which has brake shoes with springs activated by a cam lever or, alternately, said braking means can consist of a metal disk.

Preferentially, each block is coupled to a mudguard that partially and radially overlies each of the wheels, thus protecting the load from dirt or fluids on the ground.

Preferentially, the trapezium body is located on an imaginary central longitudinal axis point of the fork proper.

In accordance with another aspect of the invention, the upper fork is joined to the trapezium body by threaded nuts and bolts.

Advantageously, the trapezium body is formed by an element that has a section that closely resembles an empty box shape in which the upper fork is coupled, with two prolongations opposite each other projecting sideways from said section, to which the articulated bars are coupled.

In an alternative to the invention, the articulated bars are, at one end, articulated in turning fashion to the body of the trapezium and at the opposite end, in turning fashion, to the corresponding block.

Also advantageously, the support plate is equipped with several grooves located at different heights in order to couple the platform at varying heights.

Other characteristics and advantages of the improved fork for bicycles and similar, object of this invention, will be made clear from the description of a preferred but not exclusive embodiment, which is explained, as a non-restrictive example, with reference to the attached drawings wherein:

### BRIEF DESCRIPTION OF THE DRAWINGS

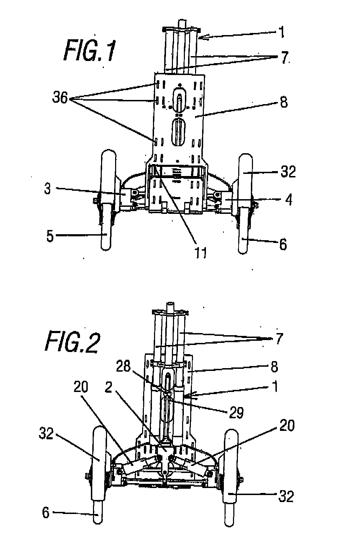

Figure 1. A front elevation view of the improved front fork for bicycles and similar according to this invention in rest position and with the folding platform in its retracted position;
Figure 2. A back elevation view of the fork shown in the previous figure in rest position;
Figure 3. A perspective exploded view of the improved fork of the invention;
Figure 4. A front elevation view of the improved fork in a tilting position;
Figure 5. A back elevation view of the fork shown in Figure 4 in tilting position;
Figure 6. A perspective exploded view of the set of plates and platforms for supporting the load located in the lower part of the improved fork of the invention;
Figure 7. A perspective exploded view corresponding to the lower section of the improved fork of the invention;
Figure 8. A perspective view of an embodiment of the configuration of the braking means located in one of the blocks;
Figure 9. A front elevation view of a second embodiment of the improved fork of the invention in which each of the wheels is located at different ground levels;
Figure 10. A back elevation view of the improved fork of the invention shown in Figure 9 in which each of the wheels is located at different ground levels; and
Figure 11. A perspective view of a conventional bicycle assembled with the improved front fork in accordance with this invention.

### DESCRIPTION OF A PREFERRED EMBODIMENT

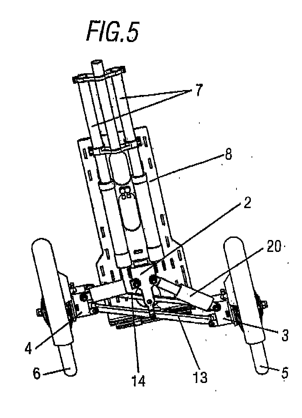

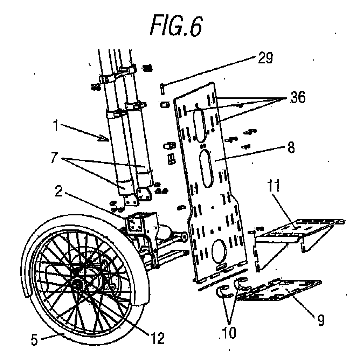

In view of the attached figures, a specific embodiment of the improved fork intended for the transport of objects on bicycles is formed by an upper fork (1) proper that can turn with respect to a conventional bicycle frame (touring bicycle, mountain bicycle, etc), the handlebars being coupled to the upper part of which as explained. This upper fork (1) is joined below to a trapezium body (2) made of aluminium, being articulated to said trapezium body (2) two blocks (3, 4) set on each side of said trapezium (2), and in which each block (3, 4) is equipped with a sliding wheel (5, 6) supported by an axle (33) and fixed by means of a nut and washer (12). As can be seen more clearly in Figures 5 and 6, the trapezium body (2) is formed by an element that has a section closely resembling the shape of an empty box in which the upper fork (1) is coupled, with two prolongations opposite each other projecting sideways from said section, to which the articulated bars are coupled which will later be described.

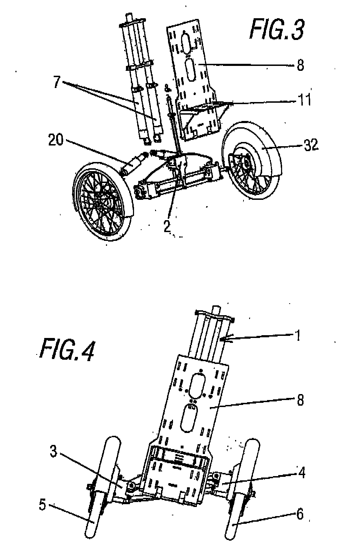

The aforementioned upper fork (1) is equipped with a suspension system made up of two parallel tubular bodies (7) like pistons joined together that act hydraulically or pneumatically, said upper fork (1) ending in two plates, each having three holes, which will coincide with the holes in the trapezium body (2) that will be threaded in order to be fastened by means of screws (19), as can be seen more clearly in Figures 3 and 6.

The front fork of the invention is furthermore equipped with a shock absorber system in each block (3, 4) the purpose of which is to maintain the system in the rest position and to control the tilting movement of the fork set when in use. Furthermore, said improved fork is also equipped with fastening means for coupling at least one platform for transporting objects, in such a manner that in a working condition of the bicycle, the platform (which can be of the fixed or moveable type, as will be later described and to which a children's carrier seat can be coupled) is maintained in a significant horizontal position with respect to the ground.

The previously mentioned fastening means essentially consist of a first support plate (8) vertically placed with respect to the ground the upper part of which is fastened to the upper fork (1) on which a horizontally placed fixed platform is coupled (11), as can be seen more clearly in Figure 6. This support plate (8) firmly grasps a moveable platform (9) which is maintained with a spring system and turns thanks to a hinge (10) located on the lower part of the support plate (8) and at one end of the fixed plate (11). As can be seen in different figures, the support plate (8) has several grooves (36) located at different heights in order to couple the platform (11) at varying heights according to the user's needs.

With respect to the shock absorber system, this consists of two parallel bars (13, 14) fastened by one of its ends to the two blocks (3, 4) and the opposite end of the trapezium body (2). At each of the fastening points the bar (13) is supported on a screw (15) which in turn acts as turning shaft. Between the bar (13) for the turn of the screw (16) bronze tips (17) will be placed, including Teflon washers (18) in order to prevent friction with the blocks and with the central trapezium body (2). Similarly, the upper bar (14) is placed the same way as the bar (13) but instead of bronze tips it has ball bearings (9) and Teflon washers (19) slightly larger owing to the fact that the tips and the flaps of the blocks are larger.

Moreover, between the trapezium body (2) and the side blocks (3, 4) shock absorbers are placed (20) which are fastened in a shank (37) that projects from one side of the blocks (3), (4) and which will be responsible for returning the set to the initial or rest position.

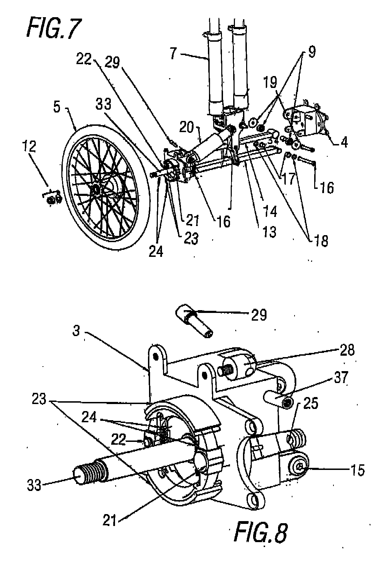

The fork also has braking means. In the event that these braking means are of the drum type, such as the means shown in Figure 8, two orifices located in the blocks (3, 4) fulfil the following functions: On the one hand, the shallower orifice will hold a camshaft (21) of the drum brake while the other hole will hold the support shaft of the brake shoes (22). The system also has two brake shoes (23), two springs (24) which ensure that when the cam, by means of the cam lever (25), ceases to act on the brake shoes (23), the latter cease to press the drum found in the wheel bushing (5, 6).

The braking means, whether of the drum or disk type, have a series of tensor supports (28) and tensors (29) so that the braking for each wheel can be regulated (5, 6). Furthermore, said braking means have a casing (30) that runs along the support plate (8) and in which the braking system is fixed and guided by a guide element (31) for the casing.

Advantageously, each of the blocks (3, 4) also supports a mudguard (32) to ensure that the load to be transported can be protected from dirt or fluids that may be on the ground.

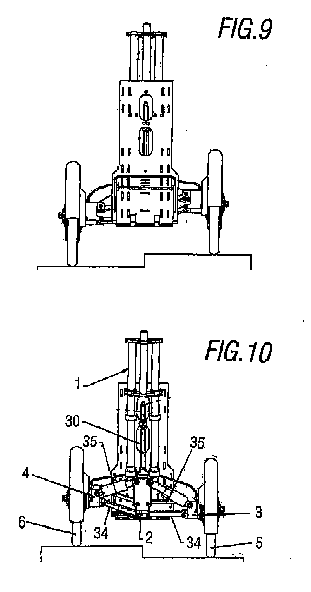

Figures 9 and 10 represent a second embodiment of the invention in which the main difference with respect to the embodiment presented previously is the fact that the bars (13, 14) are replaced by two pairs of bars (34, 35) which independently join the two blocks (3, 4) with the trapezium (2), in other words, the block (3) with a pair of the bars (34, 35) and the block (4) with the other pair of bars (34, 35) tilting independently of the trapezium (2). Thus the fork is capable of absorbing the ground irregularities with no need for shock absorption in the fork.

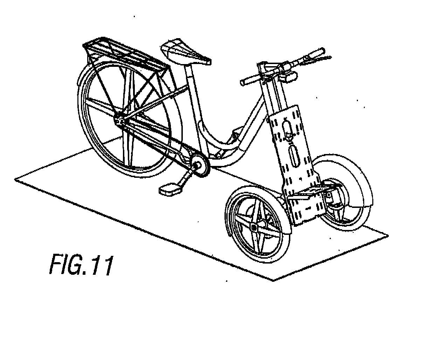

Finally, Figure 11 shows with greater clarity the purpose and layout of the improved fork described in this report on a bicycle, an exact embodiment having been represented of same in which, for construction reasons, the two front wheels are smaller than the back wheel.

The details, shapes, dimensions and other accessory elements, as well as the materials employed in manufacturing the bicycle fork of the invention can be replaced, if necessary by others that are technically equivalent and do not stray from the essentialness of the invention nor the scope defined by the claims that follow.

## Claims

1. Improved fork for bicycles and similar, for transporting objects, comprising an upper fork (1) proper that can turn with respect to the bicycle frame and in which the upper part is coupled to handlebars, **characterised by** the fact that said upper fork (1) is joined below to a trapezium body (2), being articulated to said trapezium two blocks (3, 4) set on each side of the aforementioned trapezium body (2), having equipped each block (3, 4) with at least one sliding wheel; in which an independent shock absorber system is supplied in each block; and equipped with fastening means for coupling at least a platform for the transport of objects, in such a way that in a working condition of the bicycle, the platform (9, 11) is maintained in a position that is significantly horizontal with respect to the ground.

2. Improved fork for bicycles according to claim 1, **characterised by** the fact that the upper fork (1) has a suspension system formed by two parallel tubular bodies (7) joined together, which work hydraulically or pneumatically.

3. Improved fork for bicycles according to claim 1, **characterised by** the fact that the aforementioned fastening means consist of a support plate (8), vertically positioned onto which a horizontally positioned platform (9, 11) can be coupled.

4. Improved fork for bicycles according to claim 3, **characterised by** the fact that the platform (9) has folding means for collapsing the moveable platform (9) with respect to the support plate (8).

5. Improved fork for bicycles according to claim 3, **characterised by** the fact that the platform (9, 11) is also moveable in terms of height.

6. Improved fork for bicycles according to claim 3, **characterised by** the fact that the support plate (8) is joined below to the trapezium body (2) and joined above to the upper fork (1).

7. Improved fork for bicycles according to claim 1, **characterised by** the fact that each block (3, 4) is equipped at one end with an axle (33) coupled to the wheel (5, 6) and at the opposite end with two articulated bars (13, 14) to the body of the trapezium (2), the articulation points of which correspond to the turning points.

8. Improved fork for bicycles according to claims 1 and 7, **characterised by** the fact that the block (3, 4) includes a cushioning element joined to the body of the trapezium (2).

9. Improved fork for bicycles according to claim 1, **characterised by** the fact that it has braking means for braking the wheels (5, 6).

10. Improved fork for bicycles according to claim 1, **characterised by** the fact that each block (3, 4) is coupled to a mudguard (32) that partially and radially overlies each of the tyres (5, 6).

11. Improved fork for bicycles according to claim 9, **characterised by** the fact that the braking means consist of a drum (26) located on the wheel bushing (27) that has in its interior brake shoes (23) with a spring activated by a cam lever (25).

12. Improved fork for bicycles according to claim 9, **characterised by** the fact that the braking means consist of a metal disk.

13. Improved fork for bicycles according to claim 1, **characterised by** the fact that the trapezium body (2) is located at a central longitudinal axis point of the fork proper.

14. Improved fork for bicycles according to claim 4, **characterised by** the fact that the folding means consist of hinges located in the rear part of the moveable platform and a spring.

15. Improved fork for bicycles according to claim 1, **characterised by** the fact that the upper fork (1) is joined to the body of the trapezium (2) with threaded nuts and bolts.

16. Improved fork for bicycles according to claims 1 and 7, **characterised by** the fact that the trapezium body (2) is formed by an element that has a section that closely resembles an empty box in which the upper fork (1) is coupled, with two prolongations opposite each other extending sideways to which the articulated bars are coupled (13, 14).

17. Improved fork for bicycles according to claim 7, **characterised by** the fact that the articulated bars (34, 35) are articulated at one end in turning fashion to the body of the trapezium (2) and at the opposite end, in turning fashion, to the corresponding block (3), (4).

18. Improved fork for bicycles according to claims 4 and 5, **characterised by** the fact that the support plate (8) is equipped with several grooves (36) located at different heights in order to couple the platform (11) at varying heights.
